# EUROPEAN PATENT APPLICATION

(11) **EP 3 109 471 A1**
(43) Date of publication of application: **28.12.2016**
(21) Application number: 16174108.7
(22) Date of filing: 13.06.2016
(51) Int. Cl.: F04B 1/20, F04B 53/16, F16C 33/20

(54) **WATER-HYDRAULIC MACHINE**

(30) Priority: 26.06.2015 DE 202015103379 U
(71) Applicant: Danfoss A/S, 6430 Nordborg (DK)
(72) Inventor: Friedrichsen, Welm, 6430 Nordborg (DK); Andersen, Stig Kildegaard, 6340 Krusaa (DK); Iversen, Frank Holm, 6330 Padborg (DK)
(74) Representative: Knoblauch, Andreas

(57) **Abstract**

A water-hydraulic machine (1) is disclosed with at least two parts which are movable relative to one another, of which one has a surface composed of a plastic (5, 12, 13, 15, 19) with friction-reducing properties. Improvement of friction-reducing properties is achieved by injection molding a composite material on the surface of at least one of the two parts, wherein the composite comprises a basic polymer resin, preferably PEEK, and ceramic filler particles, the particles having a dimension of up to 1 μm. The friction-reducing surface treatment may be utilised for any parts in relative motion in the water-hydraulic machine, such as cyilnder liner, sliding shoe for swash plates, wear rings in general or bearing surfaces. With such a design the wear in case of a water-hydraulic machine should be kept low.

## Description

The invention relates to a water-hydraulic machine with at least two parts which are movable relative to one another, of which one has a surface composed of a plastic with friction-reducing properties.

Such a water-hydraulic machine is known from the "Nessie" project of Danfoss A/S, Nordborg, Denmark. Exemplary disclosures for such a machine are found in DE 43 01 124 A1, DE 43 01 120 C2 or DE 44 24 610 A1.

In the case of a water-hydraulic machine, water is used as the hydraulic medium. Water has the advantage over the hydraulic oils which are otherwise predominantly used that environmental contamination practically does not occur in the event of a leak.

In contrast to oil, water nevertheless has the disadvantage that the hydraulic medium cannot be used to the same extent as oil in order to lubricate the parts moved in relation to one another. Water lubricates to a lesser extent and can mainly have a cooling effect.

One of the surfaces has therefore been formed from a plastic with friction-reducing properties. One particularly preferred plastic here is polyetheretherketone (PEEK). Water-hydraulic machines which are equipped with such a plastic on the contacting surface of parts moved in relation to one another can also be reliably operated with water over longer periods of time.

Nevertheless, it should still be observed that the wear of such a water-hydraulic machine is slightly greater than the wear in the case of hydraulic machines which are operated with oil as the hydraulic fluid.

The object on which the invention is based is to be able to keep the wear low in the case of a water-hydraulic machine.

This object is achieved in the case of a water-hydraulic machine of the above-mentioned type in that the plastic is formed as a polymer with ceramic filler.

A polymer with ceramic filler combines advantageous properties of a plastic with advantageous properties of ceramic in a hybrid material which is relatively easy to process and which achieves outstanding tribological characteristic values, i.e. can be operated in a low-friction manner. The problems associated with the friction in a water-hydraulic machine are thus very substantially reduced or even entirely eliminated.

The ceramic filler preferably only has particles, the largest dimension of which is at most 1 µm. This therefore involves particles from the sub-µ range. Such particles of the filler are very fine. However, they have a high abrasion resistance and at the same time satisfy plain bearing properties jointly with the plastic.

The plastic is preferably formed as an injection moulding application. The plastic can therefore be applied by injection moulding which enables a highly precise configuration of the individual parts of the water-hydraulic machine with little outlay.

The other of the two parts is preferably formed from duplex steel or superduplex steel at least on a surface which bears against the plastic. A duplex steel is a steel which has a two-phase structure which is generally composed of a ferrite (α-iron) matrix with islands composed of austenite. A duplex steel is corrosion-resistant so that it can be used in combination with water as a hydraulic medium. Outstanding friction properties are produced together with the polymer with ceramic filler, precisely in the context of the operation of a water-hydraulic machine.

One of the two parts is preferably a cylinder with a sleeve composed of plastic and the other of the two parts is preferably a piston. The cylinder-piston pairing is also under the greatest load, for example, in an axial or radial piston machine. Here, the low-friction interaction of the steel with the polymer comprising ceramic filler is very advantageous.

Alternatively or additionally, one of the two parts is a hold-down plate which is supported via a ball joint on a cylinder drum, wherein a sliding surface of the ball joint is provided with the plastic. Significant loads also arise in the region of the ball joint with which the hold-down plate is supported on the cylinder drum. These loads can then be absorbed without any problems if a sliding surface is provided with the polymer comprising ceramic filler.

It is also preferred if one of the two parts is a sliding Shoe which bears against a swash plate, wherein one of these two parts bears the plastic. The material pairing is also of particular significance here because the sliding Shoes are pressed against the swash plate with relatively high pressures.

It is also advantageous if one of the two parts is a pressure plate which is arranged between a control plate, which forms the other of the two parts, and the cylinder drum and rotates during operation jointly with the cylinder drum with respect to the control plate, wherein the control plate is provided with the plastic. Significant loads also arise in this region, which loads can be absorbed without any problems by the plastic formed as a polymer with ceramic filler.

The sliding Shoe is preferably connected via a ball joint to the piston and is provided with the plastic at least in the region of the ball joint. The loading of the ball joint at the sliding Shoe is slightly lower than the loading of the ball joint with which the hold-down plate is supported on the cylinder drum. An advantageous material pairing is nevertheless also produced here.

It is also advantageous if the sliding Shoe is held bearing against the swash plate by a hold-down plate. Here, one can also arrange the plastic formed as a polymer with ceramic filling between the sliding Shoe and the hold-down plate in order to keep the friction low.

The cylinder drum is preferably supported via a radial bearing surface on a housing, wherein the bearing surface is provided with the plastic. In this case, the plastic is provided on the housing.

It is also advantageous if one of the two parts is formed as a valve plate. One can also use the plastic formed as a polymer with ceramic filling in other water-hydraulic machines, for example, in a vane machine or in a pressure exchanger.

The machine can also be formed as a vane machine and have a rotor which bears axially against a ring in a side plate, wherein the ring or the rotor is provided with the plastic. The rotor must bear with a certain pressure against the side plate, more precisely the ring in the side plate, in order to ensure internal imperviousness. At the same time, the friction between the rotor and the ring must not be too great. The advantageous effects of the polymer with ceramic filler are once again produced here.

The same advantageous effects are also produced if the rotor is mounted in a radial bearing which has a bearing surface provided with the plastic. The friction can also be kept low here.

The vane machine preferably has vanes which are extrusion-coated with the plastic. In the case of a vane machine, the rotor is mounted eccentrically in a housing bore. The vanes bear against the inner side of the housing bore. They must be correspondingly displaced radially inwards and radially outwards with respect to the rotor during a rotation of the rotor. The plastic is particularly well suited to reducing the friction between the vanes and the rotor.

The invention will be described in greater detail below on the basis of preferred exemplary embodiments in combination with the drawing. In the drawing:
- Fig. 1: shows a first configuration of a water-hydraulic machine in the form of an axial piston machine,
- Fig. 2: shows a cutout from a vane machine, and
- Fig. 3: shows a valve plate.

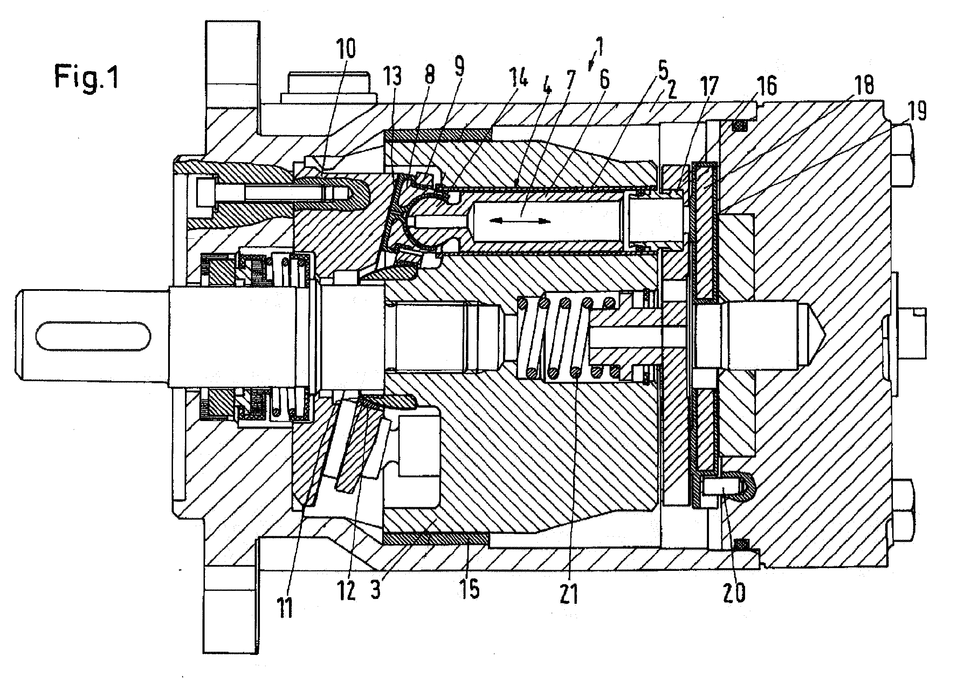

Fig. 1 shows a water-hydraulic machine 1 with a housing 2 in which a cylinder drum 3 is rotatably mounted.

At least one cylinder 4 which is clad with a sleeve 5 is arranged in cylinder drum 3. Sleeve 5 is formed by a plastic which is formed as a polymer with ceramic filler. The ceramic filler advantageously only has particles, the maximum dimension of which is at most 1 µm. Such a plastic interacts in a low-friction manner with the material of a piston 6 which is formed in the present exemplary embodiment by duplex steel or superduplex steel.

Piston 6 is movable in cylinder drum 3 in the direction of double arrow 7. Control of the movement of piston 6 in cylinder 4 is carried out by a sliding Shoe 8 which is held against a swash plate 10 under the action of a hold-down plate 9.

Hold-down plate 9 is supported via a ball joint with a ball 11 on cylinder drum 3. Ball 11 is also composed of duplex steel or superduplex steel. Hold-down plate 9 has an insert 12 composed of the above-mentioned polymer with ceramic filler in the region of contact with ball 11.

Sliding Shoe 8 is sheathed with a mould 13 from the above-mentioned polymer with ceramic filler, i.e. mould 13 forms both a bearing surface of sliding Shoe 8 on swash plate 10 as well as a bearing surface of sliding Shoe 8 on hold-down plate 9. Mould 13 is finally also extended so far that it comprises a ball 14 at the front end of piston 6, wherein said ball 14 forms a part of a ball joint.

Cylinder drum 3 is mounted in housing 2 on a bearing surface 15 composed of the above-mentioned polymer with ceramic filler, i.e. bearing surface 15 forms a radial bearing.

At the end facing away from swash plate 10, a pressure plate 16 is provided into which sleeves 17 are inserted which themselves produce a connection between pressure plate 16 and cylinders 4. Pressure plate 16 bears against a control plate 18 which is provided with a shell 19 composed of the above-mentioned polymer with ceramic filler. Control plate 18 is arranged in a stationary manner in housing 2. It is held tight here by a bolt 20. Pressure plate 16 rotates jointly with cylinder drum 3 with respect to control plate 18 so that control plate 18 can control the supply and discharge of hydraulic fluid to the cylinder 4 in the correct position.

Pressure plate 16 is pushed against control plate 18 under the force of a spring 21. Sleeves 17 enable a slight axial movement of cylinder drum 3 with respect to pressure plate 16. At the same time, spring 21 generates a certain pressure with which hold-down plate 9 pushes sliding Shoe 8 against swash plate 10.

Such a machine can be used both as a motor, if hydraulic fluid is supplied under pressure to cylinder 4, and also as a pump if the movement of piston 6 in cylinder 4 generates a certain pressure in the hydraulic fluid. As a result of the use of the above-mentioned polymer with ceramic filler in the regions where two parts of machine 1 are moved relative to one another, it is even possible to operate the machine with water as the hydraulic fluid. In this case, the stated polymer with ceramic filler reduces the friction between parts which are moved relative to one another to such an extent that noticeable wear can no longer be observed.

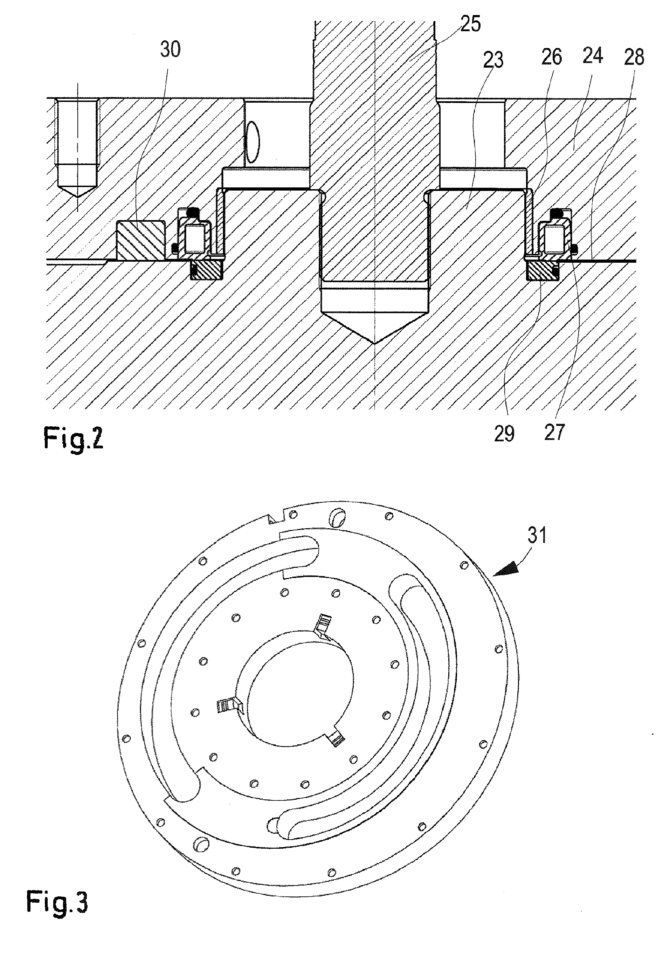

Fig. 2 shows a cut-out of a vane machine with a rotor 22 which is mounted with a stub shaft 23 in a side plate 24. Stub shaft 23 is connected in a rotationally conjoint manner to a drive shaft 25.

Stub shaft 23 is mounted via a radial bearing 26 in side plate 24. Radial bearing 26 can have, on its radial inner side, the polymer with ceramic filler as a plastic surface. Alternatively to this, stub shaft 23 can also, on its radial outer side, be coated with the polymer with ceramic filler.

A ring 27, against which rotor 22 bears with a front side 28, is arranged concentrically to stub shaft 23 in side plate 24. A wear ring 29 is arranged in front side 28. Wear ring 29 bears against ring 27. Ring 27 can be coated with the plastic, i.e. the polymer with ceramic filler, on its side facing front side 28 of rotor 22. In this case, wear ring 29 is formed from a steel, in particular a duplex steel or superduplex steel. The material pairing can nevertheless also be formed in reverse so that ring 27 is formed from the duplex steel or superduplex steel, while wear ring 29 has a coating with the plastic, i.e. the polymer with ceramic filler.

Rotor 22 is mounted eccentrically in front plate 24. A supporting element 30, against which front side 28 of rotor 22 also bears, is provided in the region of greatest eccentricity. Supporting element 30 can also be coated with the plastic, i.e. the polymer with ceramic filler, on its side facing front side 28.

In a manner not represented in greater detail, rotor 22 of the vane machine represented by way of exception in Fig. 2 has vanes which delimit working chambers. These vanes are moved radially inwards and radially outwards during a rotation of rotor 22. For this purpose, they are arranged in guides. The material pairing between vanes and rotor is also formed here so that one of the two parts is formed from steel, in particular duplex steel or superduplex steel, and the other of the two parts is formed from the polymer with ceramic filler in any case on its surface. In particular, the vanes can be extrusion-coated here with the plastic.

Fig. 3 shows a valve plate 31, as can be used, for example, in an axial piston pump or a pressure exchanger. Valve plate 31 is coated with the polymer with ceramic filler.

The ceramic filler has particles, the maximum size of which in each direction is at most 1 µm. Larger particles are not provided.

The plastic, i.e. the polymer with ceramic filler, works in all the described material pairings preferably together with duplex steel or superduplex steel.

The plastic is preferably applied in an injection moulding application or an "injections molding process", wherein a stainless steel, in particular a duplex steel or a superduplex steel is arranged internally and externally the injection moulding component is formed from the new plastic, i.e. from the polymer with ceramic filler.

## Claims

1. Water-hydraulic machine with at least two parts which are movable relative to one another, of which one has a surface composed of a plastic with friction-reducing properties, **characterized in that** the plastic (5, 12, 13, 15, 19) is formed as a polymer with ceramic filler.

2. Machine according to Claim 1, **characterized in that** the ceramic filler only has particles, the largest dimension of which is at most 1 µm.

3. Machine according to Claim 1 or 2, **characterized in that** the plastic (5, 12, 13, 15, 19) is formed as an injection moulding application.

4. Machine according to any one of Claims 1 to 3, **characterized in that** the other of the two parts is formed from duplex steel or superduplex steel at least on a surface which bears against the plastic (5, 12, 13, 15, 19).

5. Machine according to any one of Claims 1 to 4, **characterized in that** one of the two parts is a cylinder (4) with a sleeve (5) composed of plastic and the other of the two parts is a piston (6).

6. Machine according to any one of Claims 1 to 5, **characterized in that** one of the two parts is a hold-down plate (9) which is supported via a ball joint (11, 12) on a cylinder drum (3), wherein a sliding surface of the ball joint (11, 12) is provided with the plastic.

7. Machine according to any one of Claims 1 to 6, **characterized in that** one of the two parts is a sliding Shoe (8) which bears against a swash plate (10), wherein one of these two parts bears the plastic (13).

8. Machine according to any one of Claims 1 to 7, **characterized in that** one of the two parts is a pressure plate (16) which is arranged between a control plate (18), which forms the other of the two parts, and the cylinder drum (3) and rotates during operation jointly with the cylinder drum (3) with respect to the control plate (18), wherein the control plate (18) is provided with the plastic (19).

9. Machine according to Claim 7 or 8, **characterized in that** the sliding Shoe (8) is connected via a ball joint (14) to the piston (6) and is provided with the plastic (13) at least in the region of the ball joint (14).

10. Machine according to any one of Claims 7 to 9, **characterized in that** the sliding Shoe (8) is held bearing against the swash plate (10) by a hold-down plate (9).

11. Machine according to any one of Claims 6 to 10, **characterized in that** the cylinder drum (3) is supported via a radial bearing surface (15) on a housing (2), wherein the bearing surface (15) is provided with the plastic.

12. Machine according to any one of Claims 1 to 11, **characterized in that** one of the two parts is formed as a valve plate (30).

13. Machine according to any one of Claims 1 to 4, **characterized in that** it is formed as a vane machine and has a rotor (22) which bears axially against a ring (27) in a side plate (24), wherein the ring (27) or the rotor (22) is provided with the plastic.

14. Machine according to Claim 13, **characterized in that** the rotor (22) is mounted in a radial bearing (21) which has a bearing surface provided with the plastic.

15. Machine according to Claim 13 or 14, **characterized in that** it has vanes which are extrusion-coated with the plastic.
